# EUROPEAN PATENT SPECIFICATION

(11) **EP 3 733 257 B1**
(45) Date of publication and mention of the grant of the patent: **04.02.2026**
(21) Application number: 17936660.4
(22) Date of filing: 29.12.2017
(51) Int. Cl.: B01D 29/11, B01D 29/62, G21C 19/307, B01D 29/33, B01D 29/48, B01D 29/54, B01D 29/68

(54) **ACTIVE FILTER OF A NUCLEAR POWER STATION SUMP TANK**
AKTIVER FILTER EINER SAMMELWANNE FÜR KERNKRAFTWERK
FILTRE ACTIF POUR UN RÉSERVOIR DE COLLECTE D'UNE CENTRALE NUCLÉAIRE

(43) Date of publication of application: 04.11.2020
(73) Proprietor: Joint-Stock Company Scientific Research and Design Institute for Energy Technologies Atomproekt, St. Petersburg, 197183 (RU); Joint Stock Company "Science and Innovations", Moscow 119180 (RU)
(72) Inventor: BEZLEPKIN, Vladimir Viktorovich, St.Petersburg, 194223 (RU); KURCHEVSKIY, Aleksey Ivanovich, St.Petersburg, 196657 (RU); KUKHTEVICH, Vladimir Olegovich, St.Petersburg, 193312 (RU); MATYUSHEV, Leonid Aleksandrovich, St.Petersburg, 196657 (RU); MITRYUKHIN, Andrey Gennadievich, St.Petersburg, 197343 (RU)
(74) Representative: Fenix Legal KB
(86) International application number: PCT/RU2017/001007
(87) International publication number: WO 2019/132702

(56) References cited:
- WO-A2-2004/082803
- EA-B1- 025 156
- NL-A- 7 111 032
- RU-U1- 59 999
- US-A- 5 108 592
- US-A1- 2014 124 432
- US-B2- 9 211 489

## Description

### Field of the invention

The invention relates to the field of nuclear engineering, namely, to ensure the safety of a nuclear power plant (NPP) in emergency mode due to the uninterrupted coolant supply to the reactor core.

### Background of the invention

One of the most dangerous accidents during the operation of NPP is a break of the main circuit.

As a result of this accident, there is a bilateral outflow of the coolant into the containment dome. This process is accompanied by a significant mass and energy release into the containment dome in the form of an overheated vapour-air mixture. This leads to dehydration of the reactor, due to which the core is heated because of the residual heat. At the same time, an increase in pressure and temperature occurs under the containment dome.

As a result of the mass and energy release, equipment, corrosion resistant coatings in the containment dome are destroyed and the coolant is saturated with debris.

To protect the reactor from overheating and core melting, an emergency cooling system is designed that includes passive and active sections. Pressure is reduced and heat is removed from the containment dome by the sprinkler system.

The boron solution from tanks located in a containment dome are used for the functioning of active safety systems. The solution from the tanks enters the emergency cooling system of the area, then into the reactor and then from the rupture in the pipeline returns to the tanks of the containment dome.

In this case, the solution contains a significant amount of debris, which can lead to the failure of elements of safety systems circuit and to stop the core cooling.

To prevent this, the intake holes for supplying the solution from the tanks to the safety systems should be equipped with strainers.

When solutions with a large amount of impurities and debris flow through the strainer element, the strainer elements may become clogged, which leads to insufficient fluid supply to the core. Various technical solutions were used to prevent this.

Self-cleaning strainers are known from prior art (US 2006/0219645 A1, publ. on October 05, 2006, "Self-cleaning strainer" and US 5688402, issued 18.11.1997, "Self-cleaning strainer"), in which the strainer is arranged in the fluid tank, a grid is installed at the inlet of the self-cleaning strainer, which traps impurities, the strainer housing has a variable cross-section: tapering from the entrance to the exit, a turbine with blades is installed in the narrow part of the strainer housing, rotated by the fluid flow generated by the pump installed at the strainer output, the strainer is equipped with a shaft passing along the strainer axis from the turbine to the grid and connecting the turbine to brushes (according to US 2006/0219645 - additionally with an impeller creating a centrifugal fluid flow, cleaning the surface of the grid) mounted on the outside of the grid with the possibility of rotation around the axis of the shaft.

During the operation of such strainers, the turbine rotates brushes that provide cleaning of the grid surface from its outer side, which prevents a decrease in the flow of coolant and thereby increases the safety of NPP in emergency mode. The drawback of such solutions, however, is the insufficient cleaning efficiency of the strainer grid due to the fact that the external brush during cleaning significantly presses particles of impurities into the holes of the grid, which leads to stuck in the holes and strainer clogging with these particles. The use of an impeller instead of one of the brushes allows to some extent to correct this drawback, however, not to a sufficient extent. In addition, the use of a turbine with a constant fluid flow slows down the fluid flow equally constantly, taking away part of its energy even if there are no extraneous impurities on the grid or they come in small quantities. This slows down the flow of fluid through the strainer, which negatively affects the safety of NPP.

A self-cleaning strainer is also known from the prior art (US 5815544, issued 29.09.1998, "Self-cleaning strainer"), in which the filtering elements are also the side surfaces of the cylindrical strainer housing, and in addition to the brushes, the external filtering surfaces are cleaned by a fluid flow from specific installed tubes with nozzles installed on the outer side of the housing, the tubes are connected to a pump forcing in them fluid pressure that has already been cleaned in the strainer. Such a strainer allows for better cleaning, however, its drawback is lack of efficiency of cleaning the strainer surfaces, associated with the use of brushes that press particles of impurities into the holes of the strainer elements and smears them on the surface, the fluid flow cleaning the strainer surfaces is directed outside the strainer and mainly tangentially, which also reduces the cleaning efficiency, as well as the dependence of the cleaning process on an external pump, which reduces the reliability of the strainer operation.

A water intake device from pools and ponds is also known from prior art (RU 2473736, publ. on 27.01.2013), including a perforated cylindrical pipe, a streamlined head, a cleaning device in the form of two brushes connected to the turbine, one of the brushes being installed outside the perforated pipe and the other inside with the possibility of rolling over it, equipped with a debris protection device in the form of a dome-shaped case with bumper vertical plates, radially mounted along its generatrix from the top to the bottom, while the turbine is vane-blade, and installed in an additional cylindrical connector rotatable around its axis and secured to the domed housing with possibility of rotation vertically to discharge pipe axis.

The drawback of this device is the lack of cleaning efficiency of the strainer surface, due to the fact that the cleaning device, made in the form of brushes, does not sufficiently clean the debris from the outside of the perforated pipe, presses it into the openings of the mesh cylinder, which leads to the clogging. In addition, the use of a turbine with a constant fluid flow slows down the fluid flow equally constantly, taking away part of its energy even if there are no extraneous impurities on the grid or they come in small quantities.

A rotating self-cleaning strainer, simultaneously rotated and cleaned by a nozzle structure is also known from prior art (US 5108592, publ. on 28.04.1992), comprising a main cylindrical pipe having an inlet and an outlet spaced apart from one another along its length, mentioned outlet hole communicates the pipe with the pump, and mentioned inlet hole communicates the pipe with fluid, a cylindrical screen for filtering fluid from debris, screen attachment, configured to coaxially rotate the screen around the specified main pipe so as to maintain the screen in the outer position against the connection to the main pipe and against the specified inlet so that the fluid entering the inlet is filtered by a screen, the inlet pipe passing coaxially inside the main pipe and protruding beyond its end, while one or more holes made in the side wall of the main pipe for one or more pipes, equipped with nozzles at outer ends that serve both for cleaning and for rotating the screen by fluid that is supplied through the supply pipe.

The nearest analogue of the claimed invention is a filter assembly (NL 7 111 032 A, publ. on 13.02.1973 ), comprising a pair of tanks in liquid connection with each other, a common main filtrate channel connecting the tanks and provided with a main discharge nozzle for the filtrate and a valve for the control of the reverse flow, a filter unit installed in each tank consisting of a cylindrical perforated filter housing on which is mounted a brush-type element with attached wiper which can be caused to rotate by the liquid flow, an inlet header in liquid connection with the liquid feed source and the tanks, provided with a change-over valve movable between two extreme positions, a discharge header connected to the tanks and provided with a second nozzle for the discharge of a small fraction of the filtrate together with foreign matter, as well as with a second change-over valve movable between two extreme positions.

The document WO 2004/082803 A2 discloses a backflushed filter assembly comprising a filter, a backwashing arrangement which in use generates and directs a backflushing flow to backflush the filter, and a drive arrangement which in use provides motive power to operate the backflushing arrangement.

The drawback of both of the above mentioned solutions is the insufficient cleaning efficiency of the strainer surface associated with the loss of flow energy spent on the rotation of the screen, as well as the need to use an external pump to create a constant fluid flow to clean the screen and rotate the strainer, which reduces the safety of the strainer when used in nuclear engineering.

The objective of the claimed invention is to create an active strained of the pit tank of NPP, which allows to increase its safety under emergency conditions.

The technical result of the claimed invention is to increase the safety of NPP under emergency conditions by increasing the efficiency of cleaning the strainer of the pit tank, as well as by using the energy of the fluid flowing through the strainer to activate the cleaning mechanism used only when the strainer surfaces are dirty.

The object of the invention is achieved by an active pit tank strainer of a nuclear power plant with the features of claim 1. Preferred embodiments of the invention are disclosed in the dependent claims.

The technical result is achieved by the fact that in the active strainer known from the prior art and comprising a housing with a cover and a base and side surfaces, said housing having a central part and a central vertical axis, wherein the housing is made of two parts, an upper and a lower one, wherein the upper part comprises an upper side surface of the side surfaces with at least one upper filtering element and the lower part comprises a lower side surface of the side surfaces with at least one lower filtering element, a cleaner shaft on said central vertical axis, cleaning pipes, wherein each cleaning pipe comprises a first end fixed at the cleaner shaft and a second end, wherein each cleaning pipe is configured to supply purified fluid from the central part of the housing to at least one of the upper and lower filtering element from the second end of the cleaning pipe, wherein each cleaning pipe comprises an opening at the level of the first end forming the intake of purified fluid, a turbine with a turbine shaft, said turbine being installed between the upper part and the lower part of the housing and configured to rotate during a fluid flow passage through it, wherein the turbine shaft is connected to the cleaner shaft and rotates the cleaning pipes when the turbine rotates.

It is preferable to make the side surfaces in the shape of a cylinder.

It is reasonable to provide the ends of the pipes supplying the purified fluid to the filtering elements with nozzles configured to supply the purified fluid in a wide range of angles.

It is recommended to configure the filtering elements in the shape of a frame and a sector slotted grid located in it, composed of horizontal and vertical wires of a triangular section.

It is reasonable to make the base in the shape of a flange with the possibility of fastening to the base of the pit tank.

### Brief description of figures

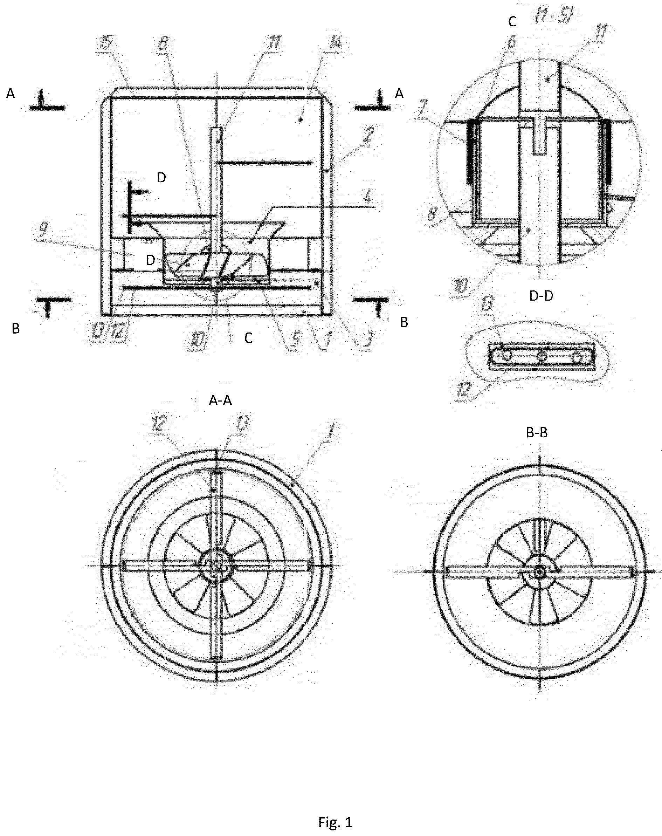

Fig. 1 shows a side overall view of the active strainer of the pit tank of NPP and in sections A-A, B-B, D-D, and in the detail fragment C.
Fig. 2 shows an overall view of the filtering element and its parts.
Fig. 3 shows the arrangement of an active strainer cleaner pipe.
Fig. 4 schematically shows the interaction of the jets from the nozzle of the cleaner and the surface of the filtering element.
Fig. 5 shows the active strainer of the pit tank of NPP under normal operation, i.e. in the absence of impurities in the fluid.
Fig. 6 shows the active strainer of the pit tank of NPP when a debris layer is formed on the lower filtering elements in emergency mode, which causes fluid to flow through the upper filtering element.
Fig. 7 shows the active strainer of the pit tank of NPP in the cleaning mode from impurities and debris.

The active strainer of the NPP pit tank according to preferable embodiment includes a housing with a cover 15, a lower flange 1 and vertical supports 2 to which a lower filtering element 3 and an upper filtering element 14 are attached, located respectively in the lower and upper parts of the housing. Flange 1 is designed to install and connect the active strainer to the base of the pit tank. Vertical support 2 are connected to flange 1. The lower filtering elements 3 and the upper filtering elements 14 are installed between supports 2, made in the shape of a sector slotted grid connected to the frame 16 of the filtering element and composed of horizontal wires 17 and vertical wires 18 made of triangular wire elements. The cylindrical surface of the active strainer is formed of four sectors of the filtering elements 3, 14.

The turbine chamber 4 is installed between the upper and lower parts of the active strainer so that the entire flow of fluid entering the upper part of the active strainer passes through it. The turbine chamber 4 consists of a chamber casing, shaft struts 5, shaft 6, bearing 7, turbine sleeve 8 and turbine blades 9. In the turbine chamber 4, the translational fluid flow is converted into the rotational movement of the sleeve 8 and the turbine blades 9.

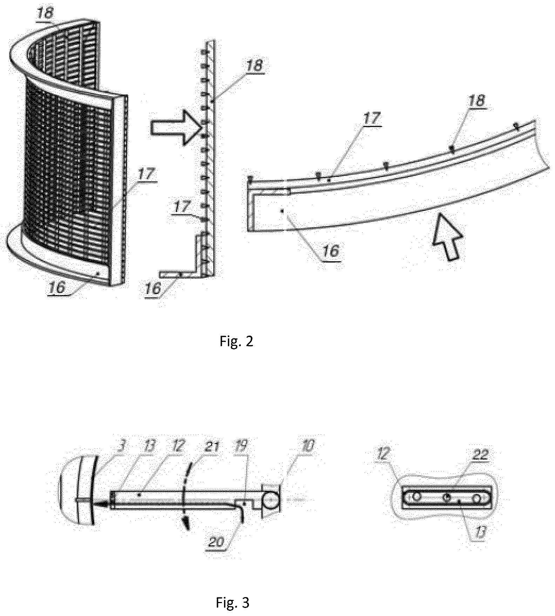

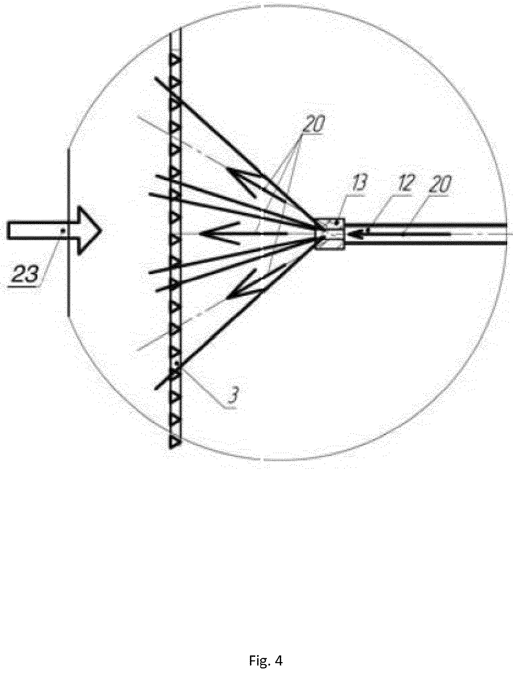

The shaft 10 of the lower cleaner and the shaft 11 of the upper cleaner are connected to the turbine sleeve 8. Pipes of cleaners 12 are attached to the shafts of the cleaners. Pipes 12 of the cleaner is made in the shape of a profile pipe. A nozzle 13 is installed at the end of the pipe, remote from the central axis of the active strainer, which ensures the distribution of the output jets within the service area of the cleaner. On the opposite side of the cleaner pipe, an opening 19 made in the shape of a through cut-out for fluid intake, when the cleaner rotates in direction 21 (Fig. 3) providing the fluid flow 20 into the pipe of the cleaner 12 and then to the holes 22 of the nozzle 13, which can be configured to spray the purified fluid in a wide range of angles in the direction of the filtering elements 3, 14 and in the general direction opposite to the flow of the fluid 23 to be filtered (Fig. 4).

Thus, the design of the active strainer provides for self-cleaning of the surfaces with a reverse flow of purified fluid leaving the nozzles 13. At the same time, a fluid flow through an active strainer is used as an energy source to create a reverse flow, which increases the safety of NPP operation in emergency conditions, since it does not require the use of external energy sources, for example, pumps, whose operation in emergency conditions is not guaranteed. In addition, the power consumption from the fluid flow for the operation of the turbine and the cleaning of the filtering elements 3, 14 occurs only when the lower filtering elements 3 are clogged, which reduces the total energy loss of the fluid flow through the active strainer and thereby increases the safety of NPP in emergency conditions.

In a preferred embodiment, the active strainer can be installed at the bottom of the pit tank and tight attached by a flange 1 to the base mounted above a vertical water intake channel that drains the fluid from the pit tank into the reactor core, so that debris and impurities are discarded from active strainer during its cleaning, settled on the bottom of the pit tank and subsequently did not settle on the filtering elements 3, 14, nor in the cooling system of the reactor core.

### Detailed description of invention

During normal operation of NPP, no coolant leaks occur in it, therefore, there is no fluid flow through the active strainer.

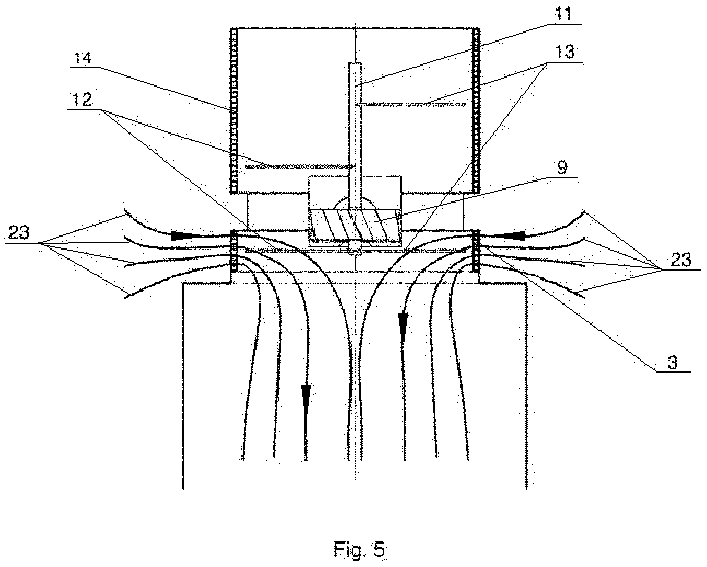

In the event of an accident that caused the loss of liquid coolant in the core of NPP, this coolant begins to accumulate in the pit tank and upon reaching the level of the lower filtering elements 3 of the active strainer, flows through them in the water intake system and, subsequently, with the help of pumps, returns to the core. At the same time, the lower filtering elements 3 are not initially clogged with extraneous impurities and debris; therefore, almost the entire fluid flow passes through the lower filtering elements 3, bypassing the turbine blades 9, as a result of which there is no flow through the turbine (Fig. 5). In this case, the cleaners do not rotate and the surface of the filtering elements (3, 14) is not cleaned, which eliminates the energy consumption from the fluid flow for rotation of the turbine 9.

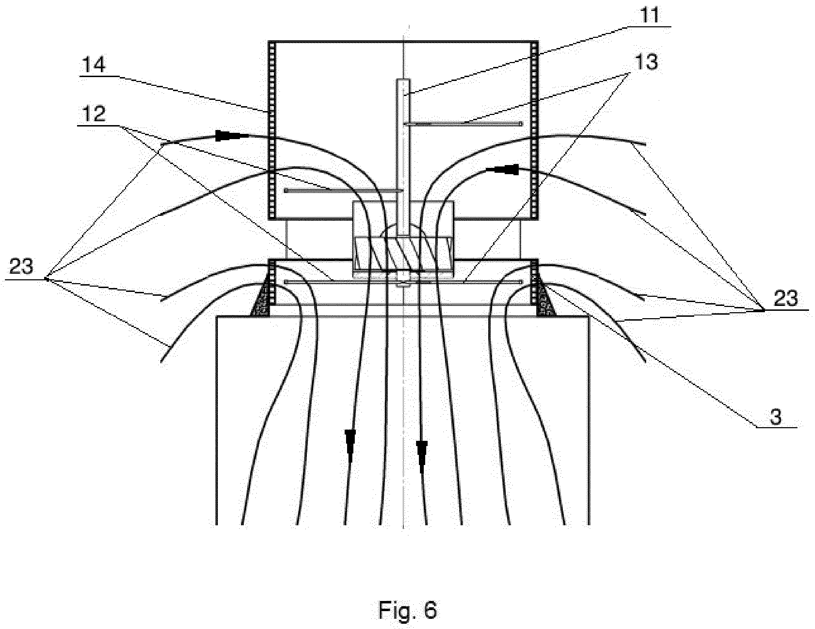

Subsequently, upon a fluid with extraneous impurities and debris inflow, the lower filtering elements 3 become clogged with a debris layer, as shown in Fig. 6, from bottom to top. This process is determined by the distribution of fluid flow over the surface of the filtering elements 3, in which approximately 80% of the total volume of fluid flows through the lower 20% of the area of the lower filtering elements 3. This process continues until the surface of the lower filtering elements 3 is completely covered with a debris layer.

During this process, the pressure losses on the lower filtering elements 3 remain almost constant and are determined by the losses on the strainer surfaces of the lower filtering elements 3. The resulting debris layer has a small thickness and a loose structure.

When the lower filtering elements 3 are completely covered with a debris layer, the main fluid flow begins to flow through the upper filtering elements 14 and, accordingly, through the turbine chamber 4. The turbine begins to rotate and rotates the pipe 12 of the cleaners, which leads to the flow of fluid into the opening 19 for the fluid intake (Fig. 3). Further, the incoming fluid accelerates under the action of centrifugal force and with excessive pressure is thrown into the nozzle orifice 13. The distance from the nozzle 13 to the surface of the filtering element 3, 14 can be chosen so that the jets from the nozzle 13 clean the entire space between adjacent cleaners (Fig. 4).

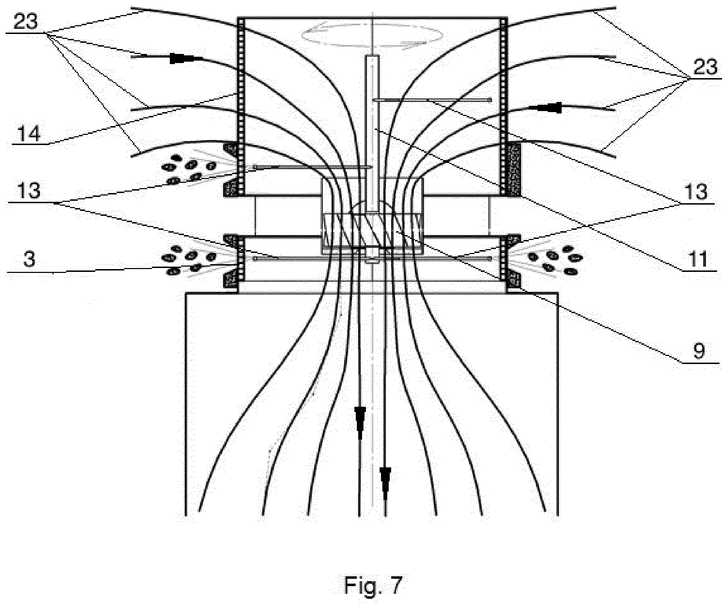

Thus, a local flow is created, directed outward of the active strainer through its filtering elements 3, 14. The debris layer is destroyed, and its particles are thrown to the bottom of the pit tank. The cleaning of the filtering elements 3, 14 when fluid enters through the upper filtering elements 14 is shown in Fig. 7.

During the time the debris is on the filtering elements 3, 14, its components coagulate, so debris particles destroyed by jets have a significant size and high density. This leads to their settlement at a higher speed, and the fragments of destruction either reach the filtering surfaces 3, 14, but much lower, or they settle to the bottom of the pit tank.

After cleaning the lower filtering elements 3, the fluid enters the lower part of the active strainer, as a result of which the turbine speed drops.

Further, the filtering-cleaning cycle is periodically repeated. The location of the turbine between the upper and lower parts of the active strainer allows for cleaning periodically after clogging of the lower filtering device 3. As a result, losses for the rotation of the turbine are reduced in a situation where the cleaning of the filtering devices 3, 14 is not required, in addition, the load on the bearings of the shaft 6 is reduced, which allows to extend its service life. As mentioned above, both of these factors directly affect the safety of NPP in emergency mode.

In a preferred embodiment, a graphite plain bearing can be used as a shaft support 6. Graphite bearings have the following advantages: they work in a liquid medium; have a low coefficient of friction; resistant to aggressive environments; used at temperatures up to 500 ° C. Moreover, since the design of the active strainer provides for the rotation of the shaft 6 only in the presence of debris in the solution, i.e. only at the accident. Thus, the service life of the bearing is limited to a period of maximum 30 days.

A full scan of the filtering surfaces with nozzles 13 is carried out per one revolution of the cleaner shaft 10, 11. At the same time, less than 0.5% of the total area of the filtering elements 3, 14 is simultaneously cleaned.

### Industrial applicability

The active pit tank strainer of a nuclear power plant allows to increase its safety under emergency conditions and can be applied for various types of nuclear power plants.

## Claims

1. An active pit tank strainer for a nuclear power plant comprising:
- a housing with a cover (15), a base and side surfaces, said housing having a central part and a central vertical axis, wherein the housing is made of two parts, an upper and a lower one, wherein the upper part comprises an upper side surface of the side surfaces with at least one upper filtering element (14) and the lower part comprises a lower side surface of the side surfaces with at least one lower filtering element (3),
- a cleaner shaft (10, 11) on said central vertical axis,
- cleaning pipes (12), wherein each cleaning pipe (12) comprises a first end fixed at the cleaner shaft (10, 11) and a second end, wherein each cleaning pipe is configured to supply purified fluid from the central part of the housing to at least one of the upper and lower filtering element from the second end of the cleaning pipe, wherein each cleaning pipe comprises an opening (19) at the level of the first end forming the intake of purified fluid,
- a turbine with a turbine shaft (6), said turbine being installed between the upper part and the lower part of the housing and configured to rotate during a fluid flow (20) passage through it, wherein the turbine shaft (6) is connected to the cleaner shaft (10, 11) and rotates the cleaning pipes when the turbine rotates.

2. The active strainer according to claim 1, **characterized in that** the side surfaces are cylindrical.

3. The active strainer according to any of the preceding claims, **characterized in that** the ends of the pipes supplying the purified fluid to the filtering elements (3, 14) are equipped with nozzles (13) configured to supply the purified fluid in a wide range of angles.

4. The active strainer according to any of the preceding claims, **characterized in that** the filtering elements (3, 14) are made in the shape of a frame (16) and a sector slotted grid located in it, composed of horizontal wires (17) and vertical wires (18) of a triangular section.

5. The active strainer according to any of the preceding claims, **characterized in that** the base is made in the shape of a flange (1) being attachable to the base of the pit tank.

6. The active strainer according to any of the preceding claims, **characterized in that** the turbine shaft (6) is supported by a graphite plain bearing.

## Patentansprüche

1. Ein aktiver Grubenbehälter-Filter für ein Kernkraftwerk, umfassend:
- ein Gehäuse mit einem Deckel (15), einem Boden und Seitenflächen, wobei das Gehäuse einen zentralen Teil und eine zentrale Vertikalachse aufweist, wobei das Gehäuse aus zwei Teilen, einem oberen und einem unteren, besteht, wobei der obere Teil eine obere Seitenfläche der Seitenflächen mit mindestens einem oberen Filterelement (14) umfasst und der untere Teil eine untere Seitenfläche der Seitenflächen mit mindestens einem unteren Filterelement (3) umfasst,
- eine Reinigungsspindel (10, 11) auf der genannten zentralen Vertikalachse,
- Reinigungrohre (12), wobei jedes Reinigungsrohr (12) ein erstes Ende aufweist, das an der Reinigungsspindel (10, 11) befestigt ist, und ein zweites Ende, wobei jedes Reinigungsrohr dazu eingerichtet ist, gereinigtes Fluid aus dem zentralen Teil des Gehäuses vom zweiten Ende des Reinigungsrohres zu mindestens einem der oberen und unteren Filterelemente zu führen, wobei jedes Reinigungsrohr eine Öffnung (19) auf der Höhe des ersten Endes aufweist, die den Einlass für gereinigtes Fluid bildet,
- eine Turbine mit einer Turbinenwelle (6), wobei die Turbine zwischen dem oberen und dem unteren Teil des Gehäuses installiert ist und so ausgeführt ist, dass sie sich während des Durchflusses (20) eines Fluids durch sie dreht, wobei die Turbinenwelle (6) mit der Reinigungsspindel (10, 11) verbunden ist und die Reinigungsrohre dreht, wenn sich die Turbine dreht.

2. Der aktive Filter nach Anspruch 1, **dadurch gekennzeichnet, dass** die Seitenflächen zylindrisch sind.

3. Der aktive Filter nach einem der vorhergehenden Ansprüche, **dadurch gekennzeichnet, dass** die Enden der Rohre, die das gereinigte Fluid zu den Filterelementen (3, 14) führen, mit Düsen (13) ausgestattet sind, die eingerichtet sind, das gereinigte Fluid in einem großen Winkelbereich zuzuführen.

4. Der aktive Filter nach einem der vorhergehenden Ansprüche, **dadurch gekennzeichnet, dass** die Filterelemente (3, 14) in Form eines Rahmens (16) und eines darin angeordneten sektorförmigen Schlitzgitters aus horizontalen Drähten (17) und vertikalen Drähten (18) mit dreieckigem Querschnitt ausgebildet sind.

5. Der aktive Filter nach einem der vorhergehenden Ansprüche, **dadurch gekennzeichnet, dass** der Boden in Form eines Flansches (1) ausgebildet ist, der am Boden des Grubenbehälters befestigt werden kann.

6. Der aktive Filter nach einem der vorhergehenden Ansprüche, **dadurch gekennzeichnet, dass** die Turbinenwelle (6) durch ein Gleitlager aus Graphit abgestützt ist.

## Revendications

1. Un filtre de puisard actif pour une centrale nucléaire comprenant :
- un carter muni d'un couvercle (15), d'une base et de surfaces latérales, ledit carter présentant une partie centrale et un axe vertical central, le carter étant constitué de deux parties, une supérieure et une inférieure, la partie supérieure comprenant une surface latérale supérieure parmi les surfaces latérales avec au moins un élément filtrant supérieur (14) et la partie inférieure comprenant une surface latérale inférieure parmi les surfaces latérales avec au moins un élément filtrant inférieur (3),
- un arbre de nettoyage (10, 11) situé sur ledit axe vertical central,
- des conduites de nettoyage (12), chacune comprenant une première extrémité fixée à l'arbre de nettoyage (10, 11) et une seconde extrémitité, chaque conduite de nettoyage étant configurée pour fournir un fluide purifié depuis la partie centrale du carter vers au moins l'un des éléments filtrants supérieur et inférieur à partir de la seconde extrémité de la conduite, chaque conduite comprenant une ouverture (19) au niveau de la première extrémité formant l'entrée du fluide purifié,
- une turbine avec un arbre de turbine (6), ladite turbine étant installée entre la partie supérieure et la partie inférieure du carter et configurée pour tourner lors du passage d'un écoulement de fluide (20) à travers celle-ci, l'arbre de turbine (6) étant relié à l'arbre de nettoyage (10, 11) et entraînant la rotation des conduites de nettoyage lorsque la turbine tourne.

2. Le filtre actif selon la revendication 1, **caractérisé en ce que** ses surfaces latérales sont cylindriques.

3. Le filtre actif selon l'une quelconque des revendications précédentes, **caractérisé en ce que** les extrémités des tubes alimentant les éléments filtrants (3, 14) en fluide purifié sont munies de buses (13) configurées pour alimenter les éléments filtrants (3, 14) selon un large éventail d'angles.

4. Le filtre actif selon l'une quelconque des revendications précédentes, **caractérisé en ce que** les éléments filtrants (3, 14) sont constitués d'un cadre (16) et d'une grille à fentes sectorielles intégrée à celui-ci, composée de fils horizontaux (17) et de fils verticaux (18) de section triangulaire.

5. Le filtre actif selon l'une quelconque des revendications précédentes, **caractérisé en ce que** sa base est constituée d'une bride (1) pouvant être fixée à la base du réservoir.

6. Le filtre actif selon l'une quelconque des revendications précédentes, **caractérisé en ce que** l'arbre de turbine (6) est supporté par un palier lisse en graphite.
